# EUROPÄISCHE PATENTANMELDUNG

(11) **EP 2 441 622 A1**
(43) Veröffentlichungstag der Anmeldung: **18.04.2012**
(21) Anmeldenummer: 11466028.5
(22) Anmeldetag: 13.10.2011
(51) Int. Cl.: B60R 9/04

(54) **Dachrelinghalter**

(30) Priorität: 14.10.2010 CZ 20100751
(71) Anmelder: Skoda Auto a.s., 293 60 Mlada Boleslav (CZ)
(72) Erfinder: Svatopluk, Foucek, 29301 Mladá Boleslav (CZ); Novotný, Miloslav, 16000 Praha (CZ)

(57) **Zusammenfassung**

Dachrelinghalter (2) zur Befestigung einer Dachreling (1) am Dach (6) eines Kraftfahrzeuges gebildet durch einen Auflageabschnitt (3) und Befestigungsabschnitt (4). Der Auflageabschnitt (3) liegt an eine Dachinnenfläche (7) an, zu der die Dachrelinghalteplatte (2) temporär fixiert ist. Der Befestigungsabschnitt (4) besteht aus einem unteren Abschnitt (12) und einem seitlichen Abschnitt (13), welche der Innendachkonstruktion zugewandt sind, die einen Basisteil eine Außenseitenteils (14) und einen Endabschnitt eines Dachprofils (15) umfasst. Der untere und seitliche Teil (12, 13) des Befestigungsabschnitts (4) der Halteplatte weist ein warmaushärtbares Befestigungsmittel (17) wie z.B. Strukturschaum auf. Während der Aushärtung füllt der Strukturschaum eine Hohlraum (16) aus und verbindet so die Halteplattenteile (12, 13) mit den anliegenden Dachkonstruktionsteilen (14, 15) fest.

## Beschreibung

### Technisches Gebiet

Die Erfindung betrifft die Befestigung eines Dachrelinghalters insbesondere zur Kraftfahrzeugkarosserie.

### Bisheriger Stand der Technik

Derzeit werden zur Befestigung der Halterungen für Fahrräder, Dachboxen usw. längliche Dachrelings verwendet. Damit das Dach nachfolgend durch eine statische Belastung in der vertikalen Richtung nicht deformiert wird, sind die Dachrelings mit den über die Dachöffnungen durchgehenden Schrauben zu den von der Dachinnenseite anliegenden Halteplatten befestigt. Die Halteplatten sind dann in der Regel mit den Schrauben zum Außenseitenteil der Karosserie befestigt. Die vertikale Belastung durch das transportierte Ladegut wird so an die Karosseriekonstruktion übertragen. Weitere Möglichkeit der Befestigung der Halteplatten an der Karosserie stellt der Strukturkleber dar. In diesem Fall wird die Halteplatte temporär zur Dachinnenfläche des Fahrzeuges an den Stellen fixiert, wo die Öffnungen für die Befestigungsschrauben sind. Danach wird am Außenseitenteil der Strukturkleber aufgetragen und das Dach so aufgelegt, dass die temporär zum Fahrzeugdach fixierten Halteplatten in dem Bereich mit dem Strukturkleberauftrag aufsetzen. Nach dem Aushärten des Strukturklebers und dem Durchgang der Karosserie durch den Lackierprozess kann die Dachreling angebracht werden. Der Nachteil dieses Verfahrens ist der relativ erhebliche technologische Aufwand, wo in der Serienfertigung der angeführte technologische Prozess der Strukturkleberauftragung eine separate Arbeitsstätte mit automatischer Dosiereinrichtung des aufzutragenden Klebers, das Vorwärmen des Klebers, eine Anpassung des Kastenrohbaus auf die Kleberauftragung erfordert.

### Darstellung der Erfindung

Die Aufgabe wird durch einen erfindungsgemäßen Dachrelinghalter gelöst, der durch einen Auflageabschnitt (mit Befestigungsöffnung), der zur Dachinnenfläche anliegt und zu dieser mit einem Fixierungselement, das durch die Dachöffnung und die Öffnung in der Halteplatte durchgeht, temporär fixiert ist und einen Befestigungsabschnitt gebildet wird, der das Profil des Buchstaben V hat, dessen unterer Abschnitt dem Basisteil des Außenseitenteils und der seitliche Abschnitt dem Endabschnitt des Dachprofils zugewandt ist, wodurch ein Hohlraum gebildet wird. Die Darstellung der Erfindung liegt darin, dass der untere Abschnitt des Befestigungsabschnitts, der dem Basisteil des Dachseitenteils zugewandt ist und der seitliche Abschnitt, der dem Endabschnitt des Dachprofils zugewandt ist, ein warmaushärtbares Befestigungsmittel aufweisen. Als warmaushärtbares Befestigungsmittel wird der Strukturschaum eingesetzt. Um eventuelle Dachdeformation infolge einer überproportionalen Ausdehnung des Strukturschaums zu vermeiden wird zwischen der Dachinnenfläche und dem Endabschnitt des Dachrelinghalters eine Spalte ausgebildet.

### Übersicht der Figuren der Zeichnungen

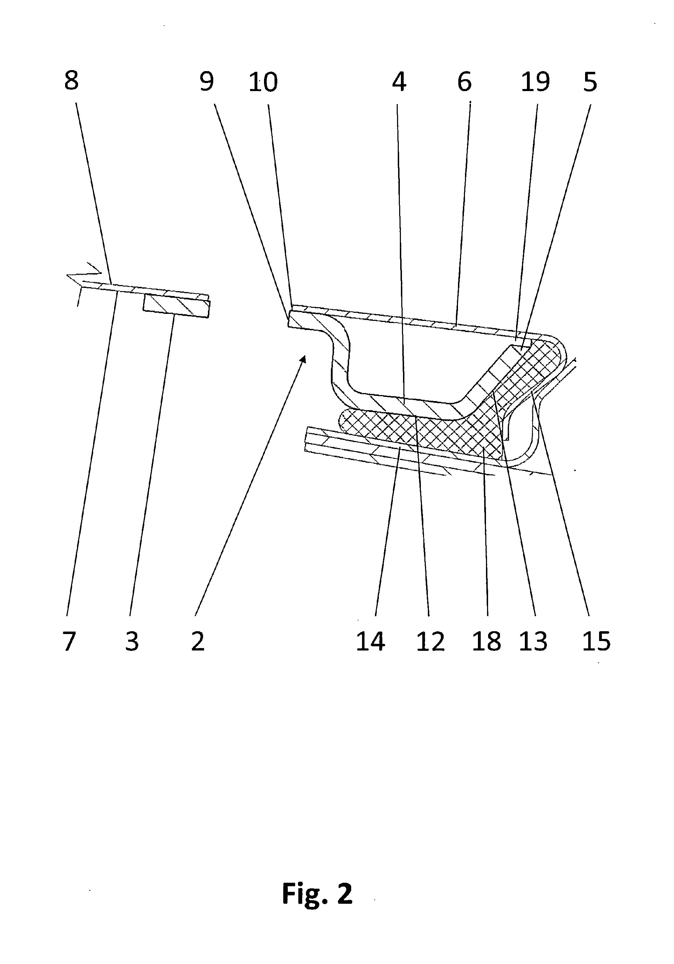

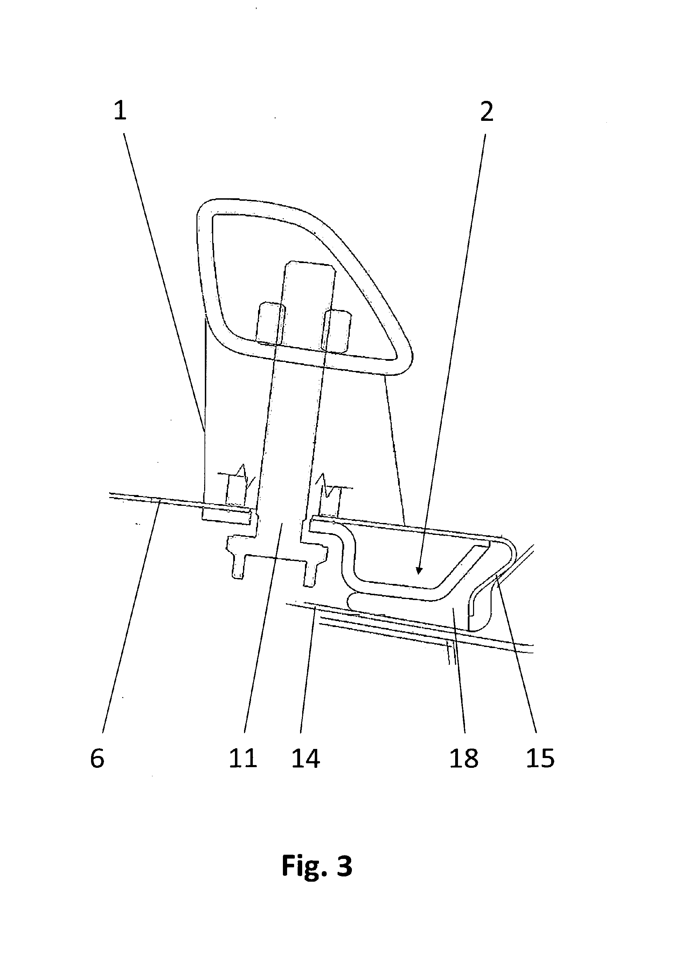

Die Erfindung wird näher anhand der Ausführungsbeispiele gemäß den beigefügten Zeichnungen erläutert, in denen die Fig. 1 den Schnitt der Dachkonstruktion mit fixiertem Dachrelinghalter und Fig. 2 den Schnitt der Dachkonstruktion mit ausgehärtetem Strukturschaum und Fig. 3 die schematische Anordnung der Dachkonstruktion mit der Dachreling darstellt.

### Ausführungsbeispiel der Erfindung

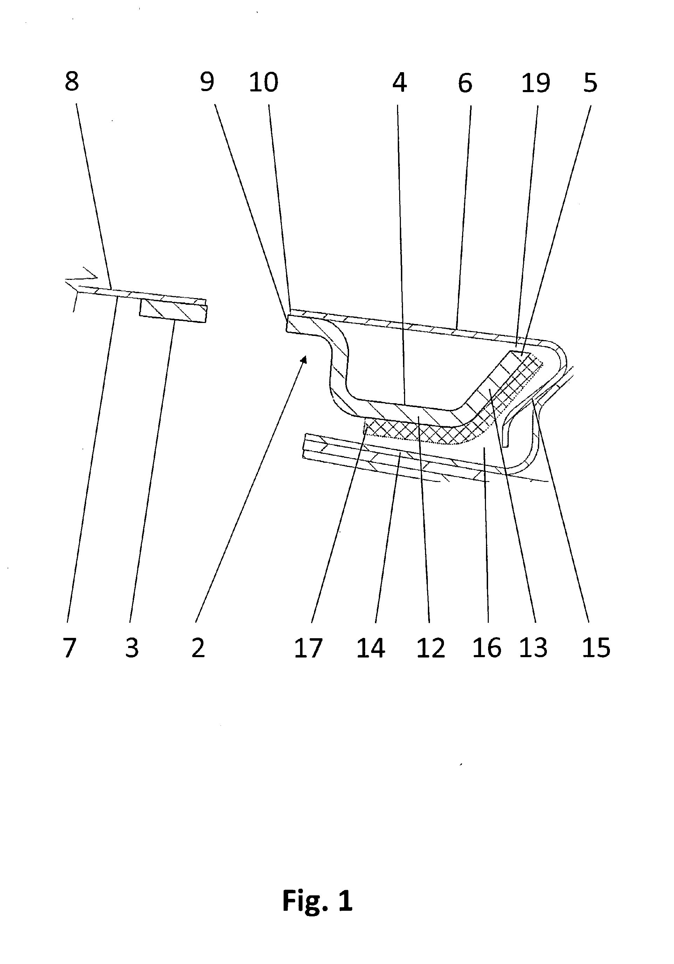

In Fig. 1 ist ein Dachrelinghalter 2 dargestellt, der in einer Dachkonstruktion 6 eines Kraftfahrzeuges angeordnet ist und zur Befestigung einer Dachreling 1 auf solche Art dient, damit keine eventuelle Deformationen des Fahrzeugdaches 6 infolge der vertikalen Belastung der Dachreling 1 auftreten. Der Dachrelinghalter 2 wird durch einen Auflageabschnitt 3 und einen Befestigungsabschnitt 4 gebildet. Der Auflageabschnitt 3 liegt einer Dachinnenfläche 7 an und weist mindestens eine Befestigungsöffnung 9 auf, die koaxial mit einer Dachöffnung 10 ist. Durch die genannten Öffnungen 9, 10 geht eine Befestigungsschraube 11 durch, mit der die Dachreling 1 an einer Dachaußenfläche 8 letztlich befestigt ist. Den zweiten Teil des Dachrelinghalters 2 bildet der Befestigungsabschnitt 4. Seine Form bzw. sein Profil ist derart ausgestaltet, dass im Wesentlichen die innere Ausgestaltung der Dachkonstruktion 6 kopiert wird. In dem erfindungsgemäßen Ausführungsbeispiel weist der Befestigungsabschnitt 4 das Profil des Buchstaben V auf, dessen unterer Abschnitt 12 dem Basisteil eines Außenseitenteils 14 und seitlicher Abschnitt 13 einem Endabschnitt des Dachprofils 15 zugewandt ist. In der fixierten Stellung des Dachrelinghalters 2 bilden der untere und seitliche Abschnitt des Befestigungsabschnitts 12, 13 und der Basisteil des Außenseitenteils 14 sowie der Endabschnitt des Dachprofils 15 einen Hohlraum 16 aus. Der untere und seitliche Abschnitt 12, 13 des Befestigungsabschnitts 4 weist ein warmaushärtbares Befestigungsmittel 17 auf. Vorteilhaft wird der Strukturschaum verwendet, der zum Dachrelinghalter 2 vor ihrer Fixierung zum Dach 6 des Fahrzeuges mit einer lokalen Erwärmung des Dachrelinghalters 2 angebracht wird.

Der Dachrelinghalter 2, an deren Befestigungsabschnitt 4 das Befestigungsmittel 17, in diesem Fall der Strukturschaum angebracht ist, der im Kaltzustand die Form einer Hartgummi aufweist, wird zuerst an die Dachinnenfläche 7 des Fahrzeuges so fixiert, dass die Befestigungsöffnung 9 und die Dachöffnung 10 koaxial sind. Die temporäre Fixierung des Dachrelinghalters 2 gegenüber dem Dach 6 des Fahrzeuges erfolgt auf bekannte Art z.B. mit Schweißpunkten, Prozessschrauben u.ä. Danach folgt die Erwärmung im KTL-Trockner, wo bei einer Temperatur von ca. 180°C der Strukturschaum ausgehärtet wird, wobei während dieses Prozesses der Hohlraum 16 mit dem Strukturschaum 18 ausgefüllt wird, der nachfolgend den Befestigungsabschnitt 4 des Dachrelinghalters 2 fest mit den entsprechenden Karosserieteilen, d.h. mit dem Basisteil des Außenseitenteils 14 und mit dem Endabschnitt des Dachprofils 15 verbindet. Nach dem Aushärten wird das Dach 6 aufgesetzt und nach dem Durchgang durch den Lackierprozess kann die Dachreling 1 eingebaut werden.

### Bezugszeichenliste

- 1: Dachreling
- 2: Dachrelinghalter
- 3: Auflageabschnitt
- 4: Befestigungsabschnitt
- 5: Endabschnitt
- 6: Dach
- 7: Dachinnenfläche
- 8: Dachaußenfläche
- 9: Befestigungsöffnung
- 10: Dachöffnung
- 11: Befestigungsschraube
- 12: unterer Abschnitt
- 13: seitlicher Abschnitt
- 14: Basisteil des Außenseitenteils
- 15: Endabschnitt des Dachprofils
- 16: Hohlraum
- 17: Befestigungsmittel
- 18: Befestigungsmittel nach dem Aushärten
- 19: Spalte

## Patentansprüche

1. Dachrelinghalter insbesondere eines Kraftfahrzeuges, der durch einen Auflageabschnitt und einen Befestigungsabschnitt gebildet wird, wo der Auflageabschnitt zur Dachinnenfläche anliegt, zu der der Dachrelinghalter temporär fixiert ist, und der Befestigungsabschnitt das Profil eines Buchstaben V aufweist und durch einen zum Basisteil eines Außenseitenteils zugewandten unteren Abschnitt und einen dem Endabschnitt eines Dachprofil zugewandten seitlichen Abschnitt gebildet wird, wobei diese Abschnitte einen Hohlraum bilden, **dadurch gekennzeichnet, dass** der untere Abschnitt (12) des Befestigungsabschnitts (4), der dem Basisteil des Außenseitenteils (14) zugewandt ist und der seitliche Abschnitt (13) des Befestigungsabschnitts (4), der dem Endabschnitt des Dachprofils (15) zugewandt ist, ein warmaushärtbares Befestigungsmittel (17) aufweisen.

2. Dachrelinghalter nach Anspruch 1 **dadurch gekennzeichnet, dass** das warmaushärtbare Befestigungsmittel (17) der Strukturschaum ist.

3. Dachrelinghalter nach Anspruch 1 **dadurch gekennzeichnet, dass** zwischen der Dachinnenfläche (7) und dem Endabschnitt (5) des Dachrelinghalters (2) eine Spalte (19) ausgebildet ist.
